# EUROPÄISCHE PATENTSCHRIFT

(11) **EP 1 541 265 B1**
(45) Veröffentlichungstag und Bekanntmachung des Hinweises auf die Patenterteilung: **30.07.2008**
(21) Anmeldenummer: 04027950.7
(22) Anmeldetag: 25.11.2004
(51) Int. Cl.: B23B 31/02, B23B 31/20

(54) **Verfahren zur Schrumpfbefestigung rotierender Werkzeuge mit vorwiegend zylindrischen Schäften**
Process for the shrink-fitting of rotary tools with predominantly cylindrical shafts
Procédé pour le serrage par frettage d'outils rotatifs avec tiges principalement cylindriques

(30) Priorität: 09.12.2003 DE 10357369
(43) Veröffentlichungstag der Anmeldung: 15.06.2005
(73) Patentinhaber: Bilz Werkzeugfabrik GmbH & Co. KG, 73760 Ostfildern (DE)
(72) Erfinder: Voss, Michael, 71229 Leonberg (DE); Wieland, Horst, 70569 Stuttgart (DE)
(74) Vertreter: Kratzsch, Volkhard

(56) Entgegenhaltungen:
- EP-A- 0 618 030
- DE-A1- 19 638 808
- US-B1- 6 315 506
- PATENT ABSTRACTS OF JAPAN Bd. 2003, Nr. 02, 5. Februar 2003 (2003-02-05) & JP 2002 283162 A (MST CORPORATION), 3. Oktober 2002 (2002-10-03)
- PATENT ABSTRACTS OF JAPAN Bd. 2002, Nr. 08, 5. August 2002 (2002-08-05) & JP 2002 120115 A (MST CORPORATION), 23. April 2002 (2002-04-23)

## Beschreibung

Die Erfindung bezieht sich auf ein Verfahren zur Schrumpfbefestigung rotierender Werkzeuge mit vorwiegend zylindrischen Schäften der im Oberbegriff des Anspruchs 1 genannten Art.

Bei einem bekannten Werkzeughalter (US 63 15 506 B1) gemäß dem Oberbegriff des Anspruchs 1 ist das Spannfutter im Zentrum mit einer Aufnahme für einen Einsatz versehen, wobei diese zentrale Aufnahme des Spannfutters eine zylindrische Innenbohrung aufweist, die sich zum freien Ende hin etwa kegelförmig erweitert. In dieser Aufnahme ist auf deren gesamter Länge ein Einsatz aufnehmbar, der in entsprechender Anpassung einen Längenabschnitt mit zylindrischer Außenfläche und einen daran anschließenden Längenabschnitt mit konischer Außenfläche aufweist, wobei beide Längenabschnitte innerhalb der Aufnahme des Spannfutters passgenau aufgenommen werden. Der Einsatz enthält im Bereich des zylindrischen Längenabschnitts eine Gewindebohrung, in die eine koaxiale Schraube mit Gewinde eingreift, die mit ihrem Schraubenkopf axial am Spannfutter abgestützt ist. Durch Anziehen dieser zentralen Schraube ist der Einsatz in der Aufnahme des Spannfutters lösbar fixiert, wobei in axialem Abstand von dem die Schraube aufnehmenden Gewindeabschnitt eine zylindrische Innenbohrung zur Aufnahme des Werkzeugschaftes vorgesehen ist. Die Längsschlitze des Einsatzes reichen radial nicht bis zur Innenbohrung und dienen als Führungsschlitze zum Leiten von Flüssigkeit oder luft zur Werkzeugspitze. Der Werkzeugschaft wird durch Schrumpfwirkung über die konische Aufnahmebohrung im Spannabschnitt des Spannfutters und die konische Außenfläche des Einsatzes radial geklemmt. Um hierbei eine sichere Spannung zylindrischer Werkzeugschäfte zu gewährleisten, müssen die Werkzeugschäfte sehr genau und mit geringer Durchmessertoleranz hergestellt und an die Bohrung des Einsatzes angepasst sein. Es können außerdem nur geringe radiale Spannkräfte realisiert werden. Werkzeugschäfte mit großer Durchmessertoleranz, wie sie z.B, bei solchen Werkzeugen vorkommt, die zur Holzbearbeitung verwendet werden, können mit einem solchen Werkzeughalter nicht, zumindest nicht zuverlässig sicher, gespannt werden.

Der Erfindung liegt die Aufgabe zugrunde, ein Verfahren der eingangs genannten Art zu schaffen, das ein sicheres Spannen auch von Werkzeugschäften mit großer Durchmessertoleranz ermöglicht.

Die Aufgabe ist bei einem Verfahren der eingangs genannten Art gemäß der Erfindung durch die Merkmale im Anspruch 1 gelöst. Weitere besondere Erfindungsmerkmale und vorteilhafte Ausgestaltungen dazu ergeben sich aus Anspruch 2. Durch das erfindungsgemäße Verfahren ist erreicht, dass auch Werkzeugschäfte mit sehr großer Durchmessertoleranz sicher gespannt werden können und das Verfahren somit zum Spannen auch solcher Werkzeuge mit vorwiegend zylindrischen Schäften mit großen Schaftdurchmessertoleranzen geeignet ist, die z.B. für die Holzbearbeitung eingesetzt werden. Das Verfahren ist einfach und kostengünstig durchführbar. Von Vorteil ist, dass bei noch nicht erhitztem Spannfutter die Aufnahme ohne axialen Druck in das Spannfutter eingesetzt werden kann. Bereits geringe radiale Drücke führen dann zu einer Verengung der zylindrischen Aufnahmebohrung im Einsatz und somit zu einer Anpassung des Durchmessers dieser zylindrischen Bohrung an den Durchmesser des Schaftes eines in die Aufnahme eingesetzten Werkzeuges. Nach dem Erhitzen des Spannfutters kann der Einsatz leicht und einfach, z.B. kraftlos oder mit nur geringen axialen Kräften, in die durch Wärmedehnung aufgeweitete Aufnahmebohrung des Spannabschnitts axial eingeschoben werden, wobei aufgrund der wirkenden radialen Kräfte die Innenbohrung des Einsatzes am Werkzeugschaft zur Anlage kommt. Beim folgenden Abkühlen des Spannfutters wird dann der Werkzeugschaft sicher gespannt. Mit Hilfe des Einsatzes können große Durchmessertoleranzen des Werkzeugschaftes überbrückt werden. Keine oder nur geringe axiale Kräfte reichen während des Schrumpfvorganges aus, um den Einsatz einerseits am Schrumpffutter und andererseits am Werkzeugschaft anzulegen. Aufgrund entsprechender Bemessung der Kegelwinkel der Aufnahmebohrung und der konischen Außenfläche des Einsatzes ist sichergestellt, dass beim Zusammenziehen des Spannfutters infolge der Abkühlung der Einsatz nicht axial herausgepresst wird. Insgesamt hat der Werkzeughalter den Vorteil, dass auch bei ungünstigen Toleranzen sehr hohe Spannkräfte realisiert werden können.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Verweisung darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand eines in der Zeichnung gezeigten Ausführungsbeispieles näher erläutert. Es zeigen:

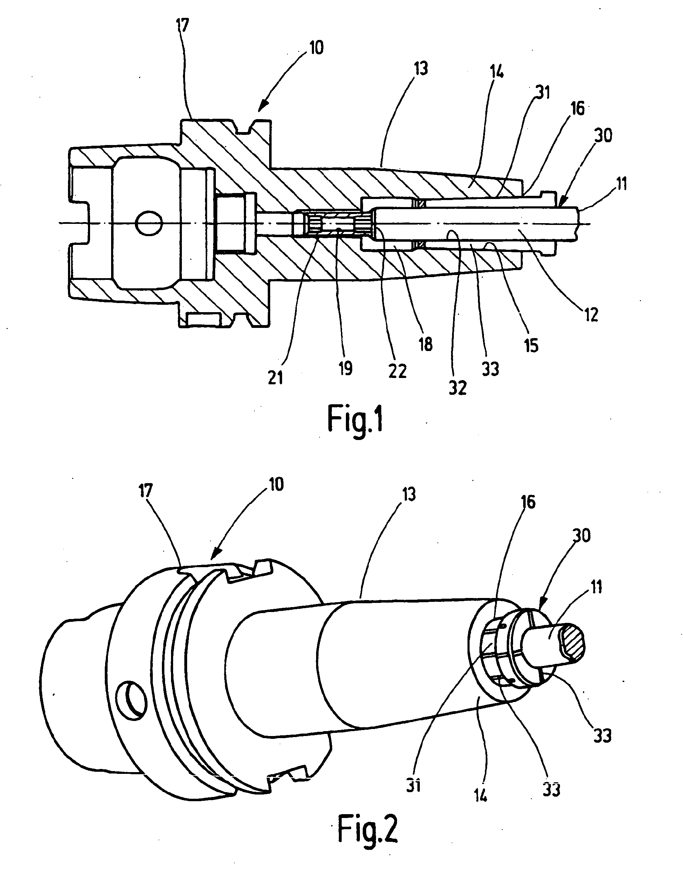

- Fig. 1: einen schematischen axialen Längsschnitt eines Werkzeughalters mit darin eingespanntem Werkzeug,
- Fig. 2: eine schematische perspektivische Ansicht des Werkzeughalters in Fig. 1.

In der Zeichnung ist ein Werkzeughalter 10 zur Schrumpfbefestigung rotierender Werkzeuge 11 schematisch dargestellt, von denen nur der im Werkzeughalter 10 gespannte Schaft 12 sichtbar ist. Der Werkzeughalter 10 weist ein Spannfutter 13 auf, das in einem Spannabschnitt 14 eine zentrale, konische Aufnahmebohrung 15 enthält, die an dem in der Zeichnung rechts befindlichen Ende 16 offen ist und zum Einstecken und Aufnehmen eines Einsatzes 30 dient. Der Werkzeughalter 10 weist anschließend an den Spannabschnitt 14 einen Endbereich 17 auf, der für die Erfindung nicht weiter bedeutsam ist und beliebig gestaltet sein kann. Mit diesem Endbereich 17 ist der Werkzeughalter 10 in bekannter Weise z.B. in eine nicht gezeigte Arbeitsspindel einer Werkzeugmaschine einsetzbar. Der Endbereich 17 kann abweichend von der Darstellung auch anders gestaltet sein, je nach den spindelseitig vorhandenen Gegebenheiten. Er kann z.B. auch als einfacher Schaft gestaltet sein, der Teil eines separaten Spannfutters ist oder der mit dem Werkzeughalter 10 seinerseits in ein separates Spannfutter lösbar einsetzbar ist, welches in der Arbeitsspindel einer Werkzeugmaschine aufnehmbar ist.

Das Werkzeug 11 ist prinzipiell beliebig. Es besteht z.B. aus einem Bohrer, Fräser od. dgl. und wird, im Werkzeughalter 10 mittels Schrumpfsitz festgespannt, rotierend angetrieben. Der Schaft 12 des Werkzeugs 11 ist zylindrisch.

Beim gezeigten Ausführungsbeispiel stellt das Spannfutter 13 ein einstückiges Gebilde dar. Bei einem anderen, nicht gezeigten Ausführungsbeispiel kann das Spannfutter 13 auch lösbar mit dem Werkzeughalter 10 verbunden sein.

Im Inneren des Spannfutters 13 schließt an das dem Ende 16 gegenüberliegende Ende der konischen Aufnahmebohrung 15 ein zylindrischer Raum 18 an, in den eine koaxiale Einstellschraube 19 axial mehr oder weniger weit vorsteht, die in einer Gewindebohrung 21 im Spannfutter 13 drehverstellbar aufgenommen ist und zu diesem Zweck von außen, z.B. axial, zugänglich ist. Die Einstellschraube 19 kann an dem Ende, das dem Schaft 12 zugewandt ist, eine z.B. plane Fläche 22 aufweisen, an der der Schaft 12 axial anschlagen kann. In dieser Weise bildet die Einstellschraube 19 einen Axialanschlag für das einzusteckende Werkzeug 11 und bestimmt entsprechend ihrer Einstellung die Einstecktiefe. Ferner kann die Einstellschraube 19 bedarfsweise auch zum Herausdrücken eines gespannten und hiernach aus dem erwärmten Spannfutter 13 zu entnehmenden Werkzeuges 11 und damit auch zur Erleichterung des Lösens des Einsatzes 30 dienen.

Der Einsatz 30 weist eine konische Außenfläche 31 auf, deren Kegelwinkel so groß wie derjenige der konischen Aufnahmebohrung 15 im Spannfutter 13 gewählt ist, wobei der Kegelwinkel kleiner als der Selbsthemmungswinkel bemessen ist, so dass der Einsatz 30 beim Zusammenziehen des Spannfutters 13 infolge Abkühlung nicht axial herausgepresst wird. Trotzdem ist der Einsatz 30 zur Entnahme eines gespannten Werkzeugs 11 nach Erhitzen des Spannfutters 13 leicht und problemlos herausziehbar. Der Einsatz 30 enthält im Inneren eine zylindrische Innenbohrung 32 zur Aufnahme der zylindrischen Schäfte 12 der Werkzeuge 11. Der Einsatz 30 ist z.B. stofflich und/oder konstruktiv derart gestaltet, dass nach axialem Einschieben des Einsatzes 30 in das zuvor induktiv oder auf andere Weise erhitzte Spannfutter 13 eine Anlage des Einsatzes 30 mit seiner Außenfläche 31 an der Aufnahmebohrung 15 des Spannfutters 13 und eine Anlage mit der zylindrischen Innenbohrung 32 an dem Schaft 12 des Werkzeuges 11 erfolgt und beim Abkühlen des Spannfutters 13 dieser Werkzeugschaft 12 durch thermisches Schrumpfen gespannt wird, wobei eine Überbrückung großer Durchmessertoleranzen bei maximalen Spannkräften ermöglicht ist. Dabei kann der Einsatz 30 kraftlos oder unter der Einwirkung nur geringer axialer Kräfte in die Aufnahmebohrung 15 des heißen Spannabschnitts 14 eingeschoben werden. Die Spannung des Schaftes 12 des Werkzeuges 11 erfolgt dabei nicht durch die Verformung aufgrund des axialen Einschiebens des Einsatzes 30 in das heiße Spannfutter 13, sondern durch das beim anschließenden Abkühlen des Spannfutters 13 erfolgende Schrumpfen dieses. Der Werkzeughalter 10 hat den Vorteil, dass aufgrund dieser besonderen günstigen Gestaltung des Einsatzes 30 mit Anpassung an den Schaft 12 des Werkzeugs 11 und die konische Aufnahmebohrung 15 des erwärmten Spannfutters 13 das gesamte Differenzmaß, gebildet aus dem Durchmesser der Aufnahmebohrung 15 im heißen Zustand des Spannfutters 13 abzüglich des Durchmessers der Aufnahmebohrung 15 im kalten Zustand des Spannfutters 13, zur Spannung des Werkzeugs 11 nutzbar ist. Auf diese Weise können auch bei ungünstigen Toleranzen sehr große Spannkräfte realisiert werden. Der Werkzeughalter 10 macht es daher möglich, auch Werkzeugschäfte 12 mit sehr großer Durchmessertoleranz sicher und zuverlässig zu spannen. Hierunter fallen z.B. auch Werkzeuge 11, die bei der Holzbearbeitung eingesetzt werden. Der Werkzeughalter 10 eignet sich für Werkzeuge 11 praktisch mit beliebiger Durchmessertoleranz der Schäfte 12.

Der Einsatz 30 kann mindestens einen Längsschlitz 33 aufweisen, wobei dieser mindestens eine Längsschlitz 33 an einem axialen Ende oder statt dessen an beiden Enden des Einsatzes 30 offen ist. Beim gezeigten Ausführungsbeispiel weist der Einsatz 30 mehrere, z.B. sechs, in Umfangsrichtung in Abständen voneinander angeordnete Längsschlitze 33 auf, die in abwechselnder Folge am einen, in der Zeichnung rechten axialen Ende bzw. am gegenüberliegenden axialen Ende offen sind.

Zum Spannen eines Werkzeuges 11 im Spannfutter 13 wird wie folgt vorgegangen. Dabei wird davon ausgegangen, dass die konische Aufnahmebohrung 15 nicht mit einem Einsatz 30 und einem Werkzeug 11 bestückt ist. In die somit am Ende 16 offene Aufnahmebohrung 15 des Spannfutters 13 wird der Einsatz 30 ohne axialen Druck eingesetzt. Die Innenbohrung 32 hat einen Durchmesser, der größer ist als der Durchmesser des Schaftes 12 des Werkzeuges 11. Dieses Werkzeug 11 wird mit seinem zylindrischen Schaft 12 in die zylindrische Innenbohrung 32 des Einsatzes 30 eingesetzt, wobei die Einstecktiefe des Werkzeuges 11 mittels der Einstellschraube 19 eingestellt wird. In diesem Zustand wird das Spannfutter 13 zumindest im Bereich des Spannabschnitts 14 induktiv oder auf andere Weise erwärmt. Aufgrund der Wärmedehnung weitet sich dabei die konische Innenbohrung 15 auf. Hiernach wird der Einsatz 30 in das heiße Spannfutter 13 kraftlos oder nur unter der Einwirkung geringer axialer Kräfte eingeschoben, um den Einsatz 30 innen am Spannfutter 13 und außen am Schaft 12 des Werkzeugs 11 anzulegen. Beim darauf folgenden Abkühlen des Spannfutters 13 erfolgt dessen Schrumpfen, wodurch das Werkzeug 11 mit dem Schaft 12 sicher gespannt wird. Dabei können auch große Durchmessertoleranzen beim Schaft 12 überbrückt werden unter Erreichen maximaler radialer Spannkräfte.

Soll das Werkzeug 11 wieder aus dem Werkzeughalter 10 entfernt werden, so wird das Spannfutter 13 zumindest im Bereich des Spannabschnitts 14 wiederum erwärmt mit einhergehender thermischer Aufweitung der Aufnahmebohrung 15. Dadurch wird von letzterer der Einsatz 30 freigegeben. Bedarfsweise wird mittels der Einstellschraube 19 axial gegen das in der Zeichnung linke Ende des Schaftes 12 gedrückt und darüber das Werkzeug 11 aus dem erwärmten Spannfutter 13 herausgedrückt, sofern das Werkzeug 11 und der Einsatz 30 beim erhitzten Spannfutter 13 nicht so bereits leicht entnehmbar sind.

## Patentansprüche

1. Verfahren zur Schrumpfbefestigung rotierender Werkzeuge (11) mit vorwiegend zylindrischen Schäften (12), mit einem Spannfutter (13), das einen Spannabschnitt (14) mit konischer Aufnahmebohrung (15) zur Aufnahme eines Einsatzes (30) darin aufweist, der mindestens einen Längsschlitz (33) und eine zylindrische Innenbohrung (32) zur Aufnahme des Werkzeugschaftes (12) und eine konische Außenfläche (31) zur Aufnahme in der Aufnahmebohrung (15) des Spannabschnitts (14) aufweist, wobei der Einsatz (30) mit seiner konischen Außenfläche (31) in die passende konische Aufnahmebohrung (15) des Spannabschnitts (14) des Spannfutters (13) eingesetzt wird, wobei des zu spannende Werkzeug (11) mit seinem zylindrischen Schaft (12) in die zylindrische Innenbohrung (32) des Einsatzes (30) eingesetzt wird,
**dadurch gekennzeichnet,**
**dass** im Spannfutter (13), vorzugsweise koaxial zu dessen Aufnahmebohrung (15), eine Einstellschraube (19) einstellbar gehalten ist, die einen Axialanschlag für ein einzusteckendes Werkzeug (11) bildet und/oder zum Herausdrücken eines zu entnehmenden Werkzeuges (11) aus dem erwärmten Spannfutter (13) dienen kann, dass nach dem Einsetzen des Einsatzes (30) die im Spannfutter (13) gehaltene Einstellschraube (19) auf die gewünschte axiale Einstecktiefe des Werkzeuges (11), das axial daran anschlägt, eingestellt wird, dass hiernach das Spannfutter (13) zumindest im Bereich des Spannabschnittes (14) zum Erreichen einer Wärmedehnung erwärmt wird, dass hiernach der Einsatz (30) in die Aufnahmebohrung (15) des Spannabschnitts (14) axial eingedrückt wird und dass hiernach das Spannfutter (13) zumindest im Bereich des Spannabschnittes (14) abgekühlt wird, wobei eine Überbrückung großer Durchmessertoleranzen bei maximalen Spannkräften ermöglicht ist.

2. Verfahren nach Anspruch 1,
**dadurch gekennzeichnet,**
**dass** zur Entnahme des Werkzeugs (11) das Spannfutter (13) zumindest im Bereich des Spannabschnitts (14) zum Erreichen einer Wärmedehnung erwärmt wird und mittels der Einstellschraube (19) eine Axialkraft auf den Werkzeugschaft (12) zum Herausdrücken des Werkzeuges (11) aus dem erwärmten Spannfutter (13) ausgeübt wird.

## Claims

1. Method for the shrink-fitting of rotating tools (11) having predominantly cylindrical shanks (12), comprising a chuck (13) which has a clamping section (14) having a tapered locating bore (15) for accommodating an insert (30) therein which has at least one longitudinal slot (33) and a cylindrical inner bore (32) for accommodating the tool shank (12) and a tapered outer surface (31) for accommodating in the locating bore (15) of the clamping section (14), the insert (30) being inserted with its tapered outer surface (31) into the matching tapered locating bore (15) of the clamping section (14) of the chuck (13), the tool (11) to be clamped being inserted with its cylindrical shank (12) into the cylindrical inner bore (32) of the insert (30), **characterized in that** an adjusting screw (19) is held in an adjustable manner in the chuck (13), preferably coaxially to its locating bore (15), and this adjusting screw (19) forms an axial stop for a tool (11) to be pushed in and/or can serve for pushing a tool (11) to be removed out of the heated chuck (13), **in that**, after the insertion of the insert (30), the adjusting screw (19) held in the chuck (13) is set to the desired axial push-in depth of the tool (11), which runs axially against it, **in that** the chuck (13) is then heated at least in the region of the clamping section (14) for achieving a thermal expansion, **in that** the insert (30) is then pressed axially into the locating bore (15) of the clamping section (14), and **in that** the chuck (13) is then cooled at least in the region of the clamping section (14), bridging of large diametrical tolerances being made possible at maximum clamping forces.

2. Method according to Claim 1, **characterized in that**, to remove the tool (11), the chuck (13) is heated at least in the region of the clamping section (14) for achieving a thermal expansion and an axial force is exerted on the tool shank (12) by means of the adjusting screw (19) for pushing the tool (11) out of the heated chuck (13).

## Revendications

1. Procédé de fixation par frettage d'outils rotatifs (11), avec tiges (12) principalement cylindriques, avec un mandrin de serrage (13) qui présente une portion de serrage (14) avec un alésage de réception conique (15) pour y recevoir un insert (30), qui présente au moins une fente longitudinale (33) et un alésage cylindrique interne (32) pour recevoir la tige de l'outil (12) et une surface extérieure conique (21) pour le logement dans l'alésage de réception (15) de la portion de serrage (14),
l'insert (30) étant inséré avec sa surface extérieure conique (31) dans l'alésage de réception conique adapté (15) de la portion de serrage (14) du mandrin de serrage (13), l'outil à serrer (11) étant inséré avec sa tige cylindrique (12) dans l'alésage cylindrique interne (32) de l'insert (30),
**caractérisé en ce**
**qu'**une vis d'ajustement (19) est maintenue de manière ajustable dans le mandrin de serrage (13), de préférence coaxialement à son alésage de réception (15), et forme une butée axiale pour un outil à insérer (11) et/ou peut servir à ressortir un outil à enlever (11) hors du mandrin de serrage chauffé (13),
en ce qu'après l'insertion de l'insert (30), la vis d'ajustement (19) maintenue dans le mandrin de serrage (13) est ajustée à la profondeur d'enfoncement axiale souhaitée de l'outil (11), qui bute axialement contre elle, en ce qu'ensuite le mandrin de serrage (13) est chauffé au moins dans la région de la portion de serrage (14) jusqu'à atteindre une dilatation thermique, en ce qu'ensuite l'insert (30) est enfoncé axialement dans l'alésage de réception (15) de la portion de serrage (14) et en ce qu'ensuite le mandrin de serrage (13) est refroidi au moins dans la région de la portion de serrage (14), ceci permettant de surmonter des grandes tolérances de diamètre à des forces de serrage maximales.

2. Procédé selon la revendication 1,
**caractérisé en ce que**
pour enlever l'outil (11), le mandrin de serrage (13) est chauffé au moins dans la région de la portion de serrage (14) jusqu'à atteindre une dilatation thermique, et au moyen de la vis d'ajustement (19), une force axiale est exercée sur la tige de l'outil (12) pour ressortir l'outil (11) hors du mandrin de serrage chauffé (13).
